# FASCICULE DE BREVET EUROPEEN

(11) **EP 2 267 594 B1**
(45) Date de publication et mention de la délivrance du brevet: **30.08.2017**
(21) Numéro de dépôt: 10166394.6
(22) Date de dépôt: 17.06.2010
(51) Int. Cl.: G06F 3/14, G09G 3/20

(54) **AFFICHEUR, PROCÉDÉ D'AFFICHAGE ET SUPPORT D'ENREGISTREMENT POUR CE PROCÉDÉ**
ANZEIGEEINRICHTUNG, ANZEIGEVERFAHREN, UND COMPUTERLESBARES AUFZEICHNUNGSMEDIUM FüR DIESES ANZEIGEVERFAHREN.
DISPLAY, DISPLAYING METHOD, AND READABLE RECORDED MEDIUM FOR SAID DISPLAYING METHOD

(30) Priorité: 23.06.2009 FR 0954267
(43) Date de publication de la demande: 29.12.2010
(73) Titulaire: Commissariat à l'Énergie Atomique et aux Énergies Alternatives, 75015 Paris (FR); Electricité de France, 75008 Paris (FR)
(72) Inventeur: Templier, François, 38500 Voiron (FR); Jobert, Timothée, 38000 Grenoble (FR); Siekierski, Edouard, 75015 Paris (FR)
(74) Mandataire: Colombo, Michel

(56) Documents cités:
- EP-A1- 1 970 886
- EP-A2- 1 256 873
- US-A1- 2007 285 343

## Description

L'invention concerne un afficheur et un procédé d'affichage à l'aide de cet afficheur. L'invention concerne également un support d'enregistrement d'informations pour la mise en oeuvre de ce procédé d'affichage.

Le déposant connaît des afficheurs comportant :
- plusieurs écrans disposés parallèlement à un même plan d'affichage de manière à former une surface cumulée d'affichage d'une image égale au cumul des surfaces individuelles d'affichage de chaque écran diminué d'éventuelles surfaces de chevauchement entre les surfaces individuelles d'affichage, et
- un calculateur apte à commander l'affichage de portions d'image sur des écrans respectifs de manière à afficher l'image complète sur la totalité de la surface cumulée d'affichage.
De l'état de la technique est également connu de :
- EP1256873A2,
- EP1970886A1,
- US2007/285343A1.
En particulier, la demande EP1256873 décrit l'affichage d'une image sur plusieurs écrans de résolutions différentes dont certains peuvent se chevaucher.

Ces afficheurs permettent d'obtenir une grande surface cumulée d'affichage à partir de plusieurs surfaces individuelles d'affichage. Toutefois, de tels afficheurs sont très encombrants. Ainsi, il est difficile de les utiliser dans des terminaux mobiles.

L'invention vise à remédier à cet inconvénient.

Elle a donc pour objet un afficheur selon la revendication 1.

La possibilité de déplacer les écrans vers la position rétractée permet de réduire l'encombrement de l'afficheur. Ceci peut être utile lors d'un déplacement de cet afficheur.

A l'inverse, la possibilité de déplacer les écrans vers la position déployée permet d'obtenir une surface cumulée d'affichage plus grande qui peut être exploitée lors de son utilisation.

Les modes de réalisation de cet afficheur peuvent comporter une ou plusieurs des caractéristiques définies dans les revendications dépendantes.

Ces modes de réalisation de l'afficheur présentent en outre les avantages suivants :
- l'utilisation d'un capteur de la position des écrans permet d'adapter automatiquement l'affichage de l'image et donc simplifie l'utilisation de cet afficheur ;
- l'affichage de la même image sur une surface cumulée d'affichage plus ou moins grande permet d'offrir à l'utilisateur une nouvelle façon d'agrandir une image en agrandissant la surface cumulée d'affichage ;
- l'utilisation d'un mécanisme de synchronisation permet de respecter, par exemple, un ratio prédéterminé entre la largeur et la hauteur de la surface cumulée d'affichage ;
- l'utilisation d'un mécanisme de verrouillage de positions intermédiaires permet d'adapter plus facilement la surfaces cumulée d'affichage au souhait de l'utilisateur.

L'invention a également pour objet un procédé d'affichage d'une image sur l'afficheur ci-dessus selon la revendication 6.

Les modes de réalisation de ce procédé d'affichage peuvent comporter les caractéristiques définies dans les revendications dépendantes.

Ces modes de réalisation du procédé d'affichage présentent en outre l'avantage suivant :
- la détection d'un déplacement des écrans permet d'obtenir une image qui s'adapte automatiquement à la nouvelle surface cumulée d'affichage obtenue.

Enfin, l'invention a également pour objet un support d'enregistrement d'informations comportant des instructions pour la mise en oeuvre du procédé d'affichage ci-dessus, lorsque ces instructions sont exécutées par un calculateur électronique,

L'invention sera mieux comprise à la lecture de la description qui va suivre donnée uniquement à titre d'exemple et faite en se référant aux dessins sur lesquels;
- les figures 1 à 3 représentent un afficheur équipé de plusieurs écrans dans trois positions différentes ;
- la figure 4 est une illustration schématique d'un mécanisme de déplacement et d'un mécanisme de synchronisation des déplacements des écrans de l'afficheur des figures 1 à 3 ;
- la figure 5 est une illustration schématique d'un mécanisme de verrouillage de la position des écrans de l'afficheur des figures 1 à 3, et
- la figure 6 est un organigramme d'un procédé d'affichage d'une image complète sur les écrans à l'aide de l'afficheur des figures 1 à 3.

Dans ces figures, les mêmes références sont utilisées pour désigner les mêmes éléments.

Dans la suite de cette description, les caractéristiques et fonctions bien connues de l'homme du métier ne sont pas décrites en détail.

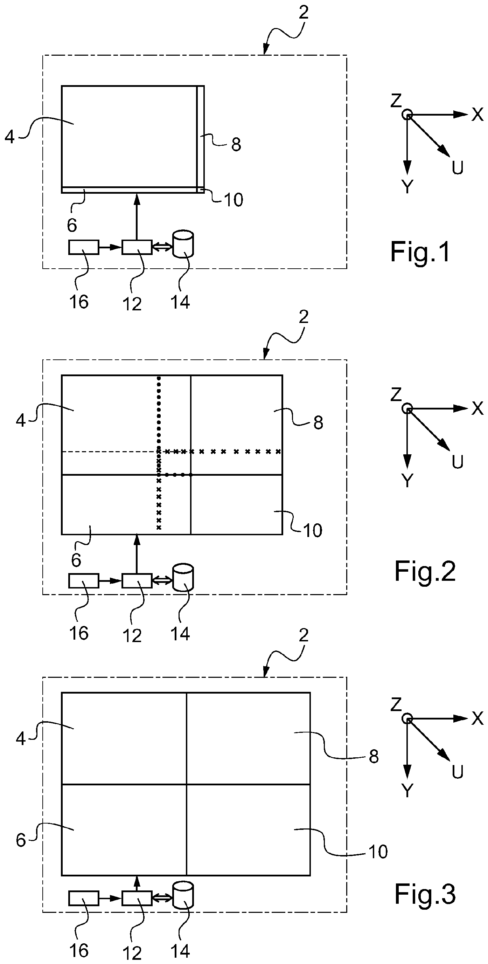

La figure 1 représente un afficheur 2 équipé de quatre écrans 4, 6, 8 et 10 déplaçables les uns par rapport aux autres parallèlement à un plan d'affichage. Ici le plan d'affichage est définie par une direction horizontale X et une direction verticale Y orthogonale à la direction X. Sur la figure 1, les écrans 4, 6, 8 et 10 sont représentés dans une position rétractée. Dans cette position rétractée, les surfaces individuelles d'affichage de chacun de ces écrans se chevauchent presque complètement. Par exemple, au moins de 90% de la surface individuelle d'affichage de chaque écran 6, 8 et 10 est cachée lorsqu'elle est observée le long de la direction Z. La surface individuelle d'affichage d'un écran est la surface maximale de l'écran sur laquelle peut être affichée une image. Ces surfaces individuelles s'étendent parallèlement au plan d'affichage.

Chacun des écrans 4, 6, 8 et 10 est un écran plat. De préférence, ces écrans plats sont aussi minces que possible. Par exemple, l'épaisseur de chaque écran dans une direction Z perpendiculaire aux directions X et Y est inférieure à un dixième de la longueur de la diagonale de cet écran. De préférence, l'épaisseur de chaque écran est inférieure à 5 cm ou 2 cm et, de manière encore plus préféré, à 5 mm ou 3 mm. A cet effet, les écrans 4, 6, 8 et 10 sont par exemple des écrans DELO (Diode Electroluminescente Organique) plus connus sous le terme anglais d' « écran OLED (Organic Light-Emitting Diode) ».

Ces écrans 4, 6, 8 et 10 sont disposés les uns par rapport aux autres de manière à créer une surface cumulée d'affichage égale au cumul des surfaces individuelles d'affichage de chacun de ces écrans diminuée des surfaces de chevauchement entre les surfaces individuelles d'affichage.

Pour que les surfaces individuelles d'affichage puissent se chevaucher, chacun des écrans 4, 6, 8 et 10 est disposé dans un plan respectif de déplacement parallèle au plan d'affichage. Ces plans de déplacement sont empilés les uns derrière les autres dans la direction Z.

Ici, l'écran 4 est l'écran disposé le plus en avant dans la direction Z. Cet écran est fixe par rapport à un châssis de l'afficheur 2.

Les plans de déplacement respectifs des écrans 6, 8 et 10 sont quant à eux situés en arrière de l'écran 4 le long de la direction Z. Par exemple, les écrans 4, 6, 8 et 10 sont empilés le long de la direction Z dans l'ordre suivant : écran 4, écran 6, écran 8 et écran 10.

Dans ce mode de réalisation, les écrans 6 et 8 sont uniquement déplaçables en translation le long, respectivement, des directions Y et X. L'écran 10 est uniquement déplaçable en translation dans son plan de déplacement le long d'une direction U faisant un angle de 45° avec les directions X et Y.

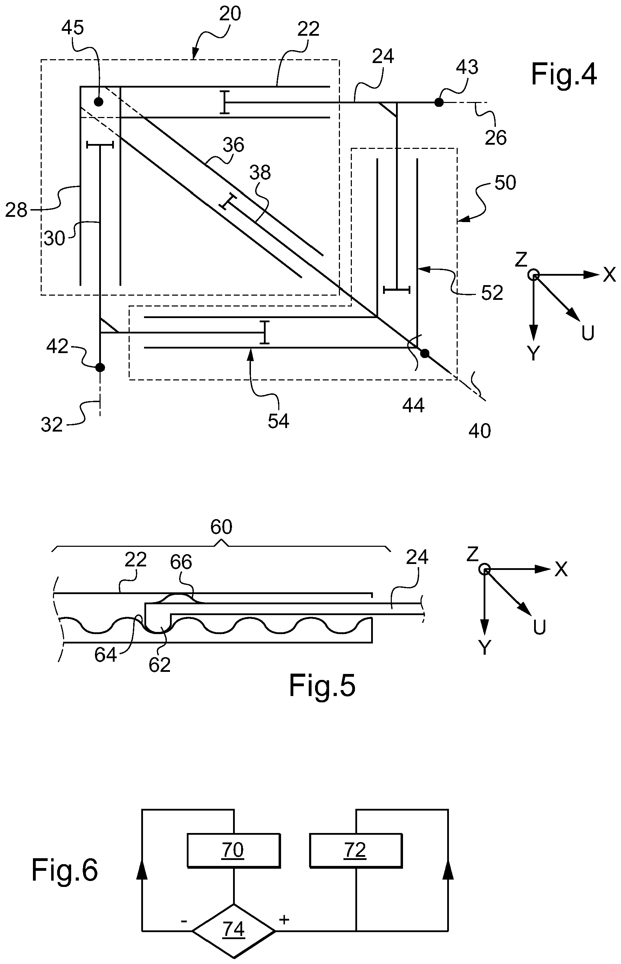

L'afficheur 2 comprend également un calculateur électronique programmable 12 raccordé à chacun des écrans 4, 6, 8 et 10. Ce calculateur 12 est apte à découper une image complète à afficher en plusieurs portions d'image et à commander l'affichage de chacune de ces portions sur l'un des écrans 4, 6, 8 et 10. Ici, plus précisément, le calculateur 12 est apte à mettre en oeuvre le procédé de la figure 6. A cet effet, le calculateur 12 est raccordé à une mémoire 14 comportant les instructions nécessaires pour mettre en oeuvre le procédé de la figure 6 lorsqu'elles sont exécutées par le calculateur 12.

Le calculateur 12 est également raccordé à un capteur 16 de la position des écrans 6, 8 et 10 le long, respectivement, des directions X, Y et U.

La figure 2 représente l'afficheur 2 dans un état où les écrans 4, 6, 8 et 10 sont dans une position intermédiaire entre la position rétractée représentée sur la figure 1 et une position complètement déployée représentée sur la figure 3. Dans cette position intermédiaire les surfaces individuelles d'affichage des écrans 4, 6, 8 et 10 se chevauchent partiellement lorsqu'elles sont observées le long de la direction Z. Toutefois, les surfaces de chevauchement sont moins importantes que dans la position rétractée.

Sur cette figure 2, le contour de la surface individuelle d'affichage de l'écran 6 qui se trouve en dessous de l'écran 4 est représenté en traits discontinus. Le contour de la surface individuelle d'affichage de l'écran 8 qui se trouve en dessous des écrans 4 et 6 est représenté par une ligne définie par une succession de points. Enfin, le contour de l'écran 10 qui se trouve en dessous des écrans 4, 6 et 8 est représenté par une ligne définie par une succession de croix.

La figure 3 représente l'afficheur 2 dans un état où les écrans sont dans leur position complètement déployée. Dans cette position complètement déployée, les surfaces individuelles d'affichage ne se chevauchent pas et sont contiguës les unes aux autres lorsqu'elles sont observées le long de la direction Z.

Ici, les écrans 4, 6, 8 et 10 sont tous identiques.

La figure 4 représente un exemple possible d'un mécanisme 20 de déplacement des écrans 6, 8 et 10 le long, respectivement, des directions X, Y et U. Dans ce mode de réalisation, le mécanisme 20 est réalisé à partir de glissières et de coulisseaux. Plus précisément, le mécanisme 20 comporte :
- une glissière 22 à l'intérieur de laquelle coulisse un coulisseau 24 le long d'un axe 26 parallèle à la direction X,
- une glissière 28 à l'intérieur de laquelle coulisse un coulisseau 30 le long d'un axe 32 parallèle à la direction Y, et
- une glissière 36 à l'intérieur de laquelle coulisse un coulisseau 38 le long d'un axe 40 parallèle à la direction U.

Les glissières 22, 28 et 36 sont fixées sans aucun degré de liberté au châssis de l'afficheur 2. Ces glissières 22, 28 et 36 sont chacune disposées, respectivement, dans les plans de déplacement des écrans 6, 8 et 10.

Les écrans 6, 8 et 10 sont fixés sans aucun degré de liberté aux extrémités libres 42 à 44, respectivement, des coulisseaux 30, 24 et 38.

Sur la figure 4, on a également représenté à titre d'illustration un point de fixation 45 de l'écran 4 au châssis de l'afficheur 2.

La figure 4 représente également un mécanisme 50 de synchronisation des déplacements des écrans 6, 8 et 10 les uns par rapport aux autres. Ici, ce mécanisme 50 rend interdépendant ou corrélé le déplacement des écrans 6, 8 et 10 le long des directions X, Y et U. Par exemple, le mécanisme 50 est conçu pour que le ratio de la largeur sur la hauteur de la surface cumulée d'affichage soit constant quelle que soit la position des écrans 6, 8 et 10.

A titre d'illustration, le mécanisme 50 est composé d'un rail vertical 52 qui s'étend verticalement le long de la direction Y entre les extrémités 43 et 44. Le mécanisme 50 comprend également un rail horizontal 54 qui s'étend le long de la direction X entre les extrémités 42 et 44. Ces rails 52 et 54 sont fixés aux extrémités libres 42 à 44 de manière à ne pas entraver les déplacements des écrans 6, 8 et 10 dans leur plan de déplacement respectif. Par exemple, les rails 52 et 54 se situent sur ou au-delà de la périphérie des écrans 6, 8 et 10.

Ces rails 52 et 54 sont suffisamment rigides pour que lorsque l'extrémité 44 est tirée dans la direction U, cette force de traction entraîne également un déplacement des coulisseaux 24 et 30 le long, respectivement, des directions X et Y. Ces rails sont par exemple également formés à l'aide de glissières et de coulisseaux respectifs.

La figure 5 représente un mécanisme de verrouillage de la position des écrans. Ce mécanisme 60 permet de verrouiller la translation des écrans 6, 8 et 10 pour les maintenir dans la position rétractée ou dans la position complètement déployée ainsi que dans plusieurs positions intermédiaires telles que celles représentées sur la figure 2.

Par exemple, le mécanisme 60 comprend un bossage 62 solidaire de l'extrémité du coulisseau 24 situé à l'intérieur de la glissière 22. Ce bossage coopère avec un renfoncement 64 solidaire de la glissière 22 pour verrouiller une position de l'écran 8. Le bossage 62 est ici sollicité à l'intérieur du renfoncement 64 par une lame ressort 66. Une succession de renfoncements sont prévus le long de la direction X de manière à permettre le verrouillage de plusieurs positions intermédiaires entre la position rétractée et la position complètement déployée.

Un mécanisme de verrouillage tel que le mécanisme 60 peut également être prévu le long des directions U et Y pour verrouiller la position des écrans 10 et 6. Toutefois, dans le cas présent, ceci n'est pas nécessaire puisqu'un verrouillage de la position de l'écran 8 entraîne également un verrouillage de la position des écrans 6 et 10 par l'intermédiaire du mécanisme 50 de synchronisation des déplacements.

Le fonctionnement de l'afficheur 2 va maintenant être décrit plus en détail en regard du procédé de la figure 6.

On suppose ici qu'initialement les écrans sont dans la position réfractée représentée sur la figure 1.

Ces écrans peuvent être déplacés de la position rétractée vers la position complètement déployée par l'utilisateur. Par exemple à cet effet, l'utilisateur tire dans la direction U sur l'écran 10 afin d'entraîner un déplacement synchronisé des écrans 6, 8 et 10, respectivement, le long des directions X, Y et U.

Lors d'une étape 70, le capteur 16 mesure, à chaque instant la position d'au moins l'un des écrans 6, 8 ou 10. Cette position est transmise en temps réel au calculateur 12.

En parallèle, lors d'une étape 72, le calculateur 12 découpe l'image complète à afficher en autant de portions d'image que d'écrans. Ce découpage est réalisé de telle manière que lorsque chacune des portions d'image est affichée sur son écran respectif, alors l'image complète est affichée sur la totalité de la surface cumulée d'affichage, c'est-à-dire sur plus de 90% et au plus 100% de la surface cumulée d'affichage. Lors de l'étape 72, ce découpage de l'image complète en portions d'image est réalisé en fonction de la position mesurée des écrans et de la taille connue des surfaces d'affichage individuelle de chaque écran.

A titre d'illustration, le découpage de l'image complète consiste d'abord à déterminer le nombre de pixels disponibles dans les directions X et Y, à partir de la position des écrans. Les pixels disponibles sont ceux qui ne sont pas cachés par un écran situé devant dans la direction d'observation Z. Le nombre total de pixels disponibles augmente avec le déplacement des écrans vers la position complètement déployée. Il varie du simple (tous les écrans superposés) au quadruple (extension maximale). Le calculateur détermine, pour chaque position, la meilleure décomposition de l'image complète à afficher par rapport aux nombres de pixels disponibles dans cette position. Deux ou plus pixels disponibles de l'écran peuvent servir à afficher le même point de l'image source. Ce calcul est conforme à celui de l'homme de l'art qui doit afficher une image source donnée sur des écrans de définition variable (c'est-à-dire ayant des nombres de pixels variables le long des directions X et/ou Y), ou bien qui doit afficher sur un écran de résolution donnée des images sources de résolution variable.

Une fois le découpage réalisé, lors de l'étape 72, le calculateur 12 commande l'affichage de chacune de ces portions d'image sur son écran respectif de manière à afficher l'image complète sur la totalité de la surface cumulée d'affichage.

L'étape 72 est réitérée pour chaque nouvelle image à afficher.

Lors d'une étape 74, le calculateur 12 utilise la position mesurée des écrans pour détecter un déplacement de ces écrans. Par exemple, le calculateur 12 compare la nouvelle position mesurée à une position mesurée précédemment. Dans le cas où aucun déplacement n'est détecté, le procédé retourne à l'étape 70.

Dans le cas contraire, le calculateur 12 procède à l'étape 72 pour adapter automatiquement la taille de l'image actuellement affichée à la nouvelle surface cumulée d'affichage obtenue suite au déplacement détecté des écrans.

Ainsi, au fur et à mesure que l'utilisateur agrandit la surface cumulée d'affichage, l'image affichée s'agrandit en même temps puisque le calculateur 12 s'arrange pour que celle-ci occupe en permanence la totalité de la surface cumulée d'affichage disponible. L'utilisateur dispose ainsi d'une nouvelle façon pour agrandir une image sans avoir à zoomer sur un détail ou une portion de cette image complète.

Le calculateur 12 affiche également l'image complète sur la surface cumulée d'affichage quelle que soit la position de l'écran.

De nombreux autres modes de réalisation sont possibles. En particulier, de nombreux autres modes de réalisation du mécanisme de déplacement des écrans sont possibles. Par exemple, ce mécanisme de déplacement n'incorpore pas nécessairement des glissières et des coulisseaux.

Le mécanisme de déplacement peut être conçu de manière à ce que les déplacements le long des directions X et Y soient indépendant l'un de l'autre. Par exemple, à cet effet, l'extrémité de la glissière 36 est fixée au châssis de l'afficheur 2 par l'intermédiaire d'une première liaison pivot dont l'axe de rotation est parallèle à la direction Z. Par exemple, cet axe de rotation passe par le point de fixation 45 illustré sur la figure 2. Le coulisseau 38 est alors fixé à l'écran 10 et au mécanisme 50 de synchronisation par de secondes liaisons pivots dont les axes de rotation sont également parallèles à la direction Z.

De façon similaire, d'autres mécanismes de verrouillage de la position des écrans sont possibles. Par exemple, le verrouillage de la position des écrans peut être obtenu à l'aide d'un pion ou d'une vis de serrage. Il n'est pas nécessaire que ce mécanisme de verrouillage soit apte à verrouiller des positions intermédiaires entre la position rétractée et la position complètement déployée, toutefois ceci est préférable.

De nombreux écrans plats sont utilisables. Par exemple, des écrans électrophorétiques sont utilisés à la place des écrans OLED. Ces écrans électrophorétiques peuvent être basés sur un mélange de billes de couleurs noire et blanche coincées entre une couche transparente supérieure et une couche inférieure. Les billes noires présentent une polarité, par exemple positive, et les billes blanches présentent une polarité par exemple négative. Des électrodes sont positionnées sous la couche inférieure. Lorsque l'électrode est activée, celle-ci va attirer, par exemple, les billes de polarité positive et repousser les billes de polarité négative. Ceci concentre donc les billes de couleur noire à proximité de la couche inférieure et des billes de couleur blanche à proximité de la couche supérieure. On peut donc par ce procédé régler la couleur d'un pixel en noir et blanc et donc faire apparaître des images. Ces écrans électrophorétiques sont bi-stables et permettent donc de maintenir l'affichage d'une image sans consommer d'énergie électrique.

Des écrans LCD (Liquid Crystal Display) sont éventuellement utilisables.

Les écrans utilisés peuvent également être des écrans tactiles.

Pour réaliser l'afficheur, il n'est pas nécessaire que les écrans aient tous la même taille. Des écrans de taille différente peuvent être utilisés. Il n'est pas non plus nécessaire que ces écrans présentent une surface individuelle d'affichage rectangulaire comme représentée ici. Par exemple, les surfaces d'affichage peuvent être des losanges, des triangles ou d'autres formes à angles aigus ou obtus.

Les écrans peuvent être déplaçables le long d'une seule direction ou au contraire le long de plusieurs directions non colinéaires. De plus, un même écran peut être déplaçable le long de plusieurs directions différentes selon, par exemple, qu'il est tiré le long d'une direction ou d'une autre.

Le mécanisme de synchronisation des déplacements des écrans peut être omis.

Le nombre d'écrans peut varier, il doit être au moins de deux mais peut également être supérieur à quatre et, par exemple, supérieur ou égal à neuf.

Le déplacement des écrans les uns par rapport aux autres peut être motorisé. Dans ce cas, le mécanisme de synchronisation des déplacements des écrans peut être obtenu par une commande appropriée du déplacement des écrans par des actionneurs.

Le capteur 16 peut être omis. Dans ce cas, un module de réglage manuel de la taille de l'image est prévu dans l'afficheur 2.

En variante, le contenu de l'image complète affichée est également modifié en fonction de la position des écrans mesurée par le capteur. Par exemple, dans la position rétractée l'image est uniquement constituée d'une illustration initiale qui occupe la totalité de la surface cumulée d'affichage. Dans la position complètement déployée, l'image complète affichée comporte la même illustration initiale complétée avec des illustrations complémentaires. Par exemple, les illustrations complémentaires sont disposées dans la partie supplémentaire de la surface cumulée d'affichage qui est apparue suite au déplacement vers la position complètement déployée. De préférence, les dimensions de l'illustration initiale sur la surface cumulée d'affichage sont les mêmes dans les positions rétractée et complètement déployée. Ainsi, un déplacement de l'écran vers sa position complètement déployée permet d'accéder aux illustrations complémentaires. Ceci peut être appliqué à la consultation d'un plan d'un centre ville et de ses banlieues. L'illustration initiale est le plan du centre ville uniquement. Les illustrations complémentaires sont les plans des banlieues. Dans cette application, en déplaçant l'écran de sa position rétractée vers sa position complètement déployée, l'utilisateur accède à plus d'informations, c'est-à-dire aux plans des banlieues.

Une autre façon de modifier l'image complète affichée en fonction de la position des écrans consiste à étirer l'illustration initiale dans la où les directions de déplacement des écrans de manière à ce que, quelle que soit la position des écrans, cette illustration occupe plus de 90% de la surface cumulée d'affichage.

L'afficheur 2 peut être utilisé dans des terminaux mobiles tels que des téléphones mobiles ou des ordinateurs portables. L'afficheur 2 peut également être mis en oeuvre pour réaliser des terminaux fixes tels qu'un téléviseur.

## Revendications

1. Afficheur comportant :
- plusieurs écrans (4, 6, 8, 10) disposés parallèlement à un même plan d'affichage de manière à former une surface cumulée d'affichage d'une image égale au cumul des surfaces individuelles d'affichage de chaque écran diminué d'éventuelles surfaces de chevauchement entre les surfaces individuelles d'affichage,
- un mécanisme (20) de déplacement des écrans (4, 6, 8, 10) parallèlement au plan d'affichage entre une position rétractée dans laquelle au moins deux écrans se chevauchent pour réduire la surface cumulée d'affichage et une position complètement déployée dans laquelle le chevauchement des écrans est réduit ou supprimé pour augmenter la surface cumulée d'affichage,
- un calculateur (12) apte à commander l'affichage de portions d'image sur des écrans respectifs de manière à afficher l'image complète sur la totalité de la surface cumulée d'affichage, ce calculateur étant notamment apte à commander l'affichage d'une image complète sur la totalité de la surface cumulée d'affichage aussi bien dans la position rétractée que dans la position complètement déployée, et
- au moins un capteur (16) apte à mesurer la position des écrans et le calculateur (12) est apte, à adapter automatiquement l'affichage de l'image en fonction de la position mesurée des écrans,
**caractérisé en ce que** :
- l'afficheur comprend un premier, un deuxième, un troisième et un quatrième écrans (4, 6, 8, 10) déplaçables les uns par rapport aux autres parallèlement à un même plan d'affichage,
- le mécanisme (20) de déplacement permet :
• le déplacement du deuxième (6) et du troisième (8) écrans uniquement en translation le long, respectivement, de directions orthogonales Y et X, et
• permet le déplacement du quatrième écran (10) uniquement en translation le long d'une direction U faisant un angle de 45° avec les directions X et Y,
- l'afficheur comprend un mécanisme (50) de synchronisation apte à imposer une corrélation entre les déplacements de ces deuxième, troisième et quatrième écrans pour que le ratio de la largeur sur la hauteur de la surface cumulée d'affichage soit constant quelle que soit la position des premier, deuxième et troisième écrans (6, 8, 10).

2. Afficheur selon la revendication 1, dans lequel le calculateur (2) est apte à commander l'affichage de la même image complète sur la totalité de la surface cumulée d'affichage aussi bien dans la position rétractée que dans la position complètement déployée.

3. Afficheur selon l'une quelconque des revendications précédentes, dans lequel :
le mécanisme (20) de déplacement comporte :
- une première glissière (22) à l'intérieur de laquelle coulisse un premier coulisseau (24) le long d'un axe (26) parallèle à la direction X,
- une deuxième glissière (28) à l'intérieur de laquelle coulisse un deuxième coulisseau (30) le long d'un axe (32) parallèle à la direction Y, et
- une troisième glissière (36) à l'intérieur de laquelle coulisse un troisième coulisseau (38) le long d'un axe (40) parallèle à la direction U,
ces glissières (22, 28, 36) étant fixées sans aucun degré de liberté à un châssis de l'afficheur 2 et étant chacune disposées, respectivement, dans des plans de déplacement des deuxième, troisième et quatrième écrans (6, 8, 10),
- les deuxième, troisième et quatrième écrans (6, 8, 10) sont fixés sans aucun degré de liberté à des première, deuxième et troisième extrémités libres (42 à 44), respectivement, des deuxième, premier et troisième coulisseaux (30, 24, 38) et le premier écran (4) est fixé sur le châssis de l'afficheur,
- le mécanisme (50) de synchronisation comprend :
• un premier rail (52) qui s'étend le long de la direction Y entre les deuxième et troisième extrémités (43, 44),
• un deuxième rail (54) qui s'étend le long de la direction X entre les première et troisième extrémités (42, 44),
ces premier et deuxième rails (52, 54) étant fixés aux première, deuxième et troisième extrémités libres (42-44) de manière à ne pas entraver les déplacements des deuxième, troisième et quatrième écrans (6, 8, 10) dans leur plan de déplacement respectif, et étant suffisamment rigides pour que lorsque la troisième extrémité (44) est tirée dans la direction U, cette force de traction entraîne également un déplacement des premier et deuxième coulisseaux (24, 30) le long, respectivement, des directions X et Y.

4. Afficheur selon l'une quelconque des revendications précédentes, dans lequel l'afficheur comporte un mécanisme (20) de verrouillage de la position des écrans dans au moins une position intermédiaire entre la position rétractée et la position complètement déployée.

5. Procédé d'affichage d'une image sur un afficheur conforme à l'une quelconque des revendications précédentes, **caractérisé en ce que** le procédé comporte :
- le déplacement des écrans parallèlement au plan d'affichage entre une position rétractée dans laquelle au moins deux écrans se chevauchent pour réduire la surface cumulée d'affichage et une position complètement déployée dans laquelle le chevauchement des écrans est réduit ou supprimé pour augmenter la surface cumulée d'affichage, et
- la commande (72) de l'affichage d'une image complète sur la totalité de la surface cumulée d'affichage aussi bien dans la position rétractée que dans la position complètement déployée,
- la mesure (70) de la position des écrans,
- la détection (74) d'un déplacement des écrans à partir de la position mesurée des écrans, et
- en réponse, le déclenchement automatique d'une nouvelle commande de l'affichage de chaque portion d'image.

6. Procédé selon la revendication 5, dans lequel le procédé comprend la commande de l'affichage de la même image complète sur la totalité de la surface cumulée d'affichage aussi bien dans la position rétractée que dans la position complètement déployée.

7. Support d'enregistrement d'informations, **caractérisé en ce qu'**il comporte des instructions pour l'exécution d'un procédé conforme à l'une quelconque des revendications 5 à 6, lorsqu'elles sont exécutées par un calculateur électronique.

## Patentansprüche

1. Anzeigeeinrichtung, umfassend:
- mehrere Bildschirme (4, 6, 8, 10), die parallel zu ein und derselben Anzeigeebene angeordnet sind, derart, dass sie eine kumulierte Anzeigefläche eines Bildes bilden, die gleich der Vereinigung der einzelnen Anzeigeflächen jedes Bildschirms ist, verringert um eventuelle Überlappungsflächen zwischen den einzelnen Anzeigeflächen,
- einen Mechanismus (20) zur Verlagerung der Bildschirme (4, 6, 8, 10) parallel zu der Anzeigeebene zwischen einer zusammengeschobenen Position, in welcher sich wenigstens zwei Bildschirme überlappen, um die kumulierte Anzeigefläche zu verringern, und einer vollständig auseinandergezogenen Position, in welcher die Überlappung der Bildschirme verringert oder beseitigt ist, um die kumulierte Anzeigefläche zu vergrößern,
- einen Rechner (12), der geeignet ist, die Anzeige von Bildabschnitten auf jeweiligen Bildschirmen derart zu steuern, dass das vollständige Bild auf der Gesamtheit der kumulierten Anzeigefläche angezeigt wird, wobei dieser Rechner insbesondere geeignet ist, die Anzeige eines vollständigen Bildes auf der Gesamtheit der kumulierten Anzeigefläche sowohl in der zusammengeschobenen Position als auch in der vollständig auseinandergezogenen Position zu steuern, und
- wenigstens einen Sensor (16), der geeignet ist, die Position der Bildschirme zu messen, wobei der Rechner (12) geeignet ist, die Anzeige des Bildes in Abhängigkeit von der gemessenen Position der Bildschirme automatisch anzupassen,
**dadurch gekennzeichnet, dass**;
- die Anzeigeeinrichtung einen ersten, einen zweiten, einen dritten und einen vierten Bildschirm (4, 6, 8, 10) umfasst, die relativ zueinander parallel zu ein und derselben Anzeigeebene verlagerbar sind,
- der Mechanismus (20) zur Verlagerung ermöglicht:
• die Verlagerung des zweiten (6) und des dritten (8) Bildschirms ausschließlich in Translation entlang orthogonaler Richtungen Y bzw. X, und
• ermöglicht die Verlagerung des vierten Bildschirms (10) ausschließlich in Translation entlang einer Richtung U, die einen Winkel von 45° mit den Richtungen X und Y bildet,
- die Anzeigeeinrichtung einen Mechanismus (50) zur Synchronisation umfasst, der geeignet ist, eine Korrelation zwischen den Verlagerungen dieses zweiten, dritten und vierten Bildschirms zu bewirken, damit das Verhältnis der Breite zur Höhe der kumulierten Anzeigefläche konstant ist, gleichgültig, welches die Position des ersten, zweiten und dritten Bildschirms (6, 8, 10) ist.

2. Anzeigeeinrichtung nach Anspruch 1, wobei der Rechner (2) geeignet ist, die Anzeige desselben vollständigen Bildes auf der Gesamtheit der kumulierten Anzeigefläche sowohl in der zusammengeschobenen Position als auch in der vollständig auseinandergezogenen Position zu steuern.

3. Anzeigeeinrichtung nach einem der vorhergehenden Ansprüche, wobei:
der Mechanismus (20) zur Verlagerung aufweist:
- eine erste Gleitführung (22), in deren Innerem ein erstes Gleitstück (24) entlang einer Achse (26) gleitet, die zur Richtung X parallel ist,
- eine zweite Gleitführung (28), in deren Innerem ein zweites Gleitstück (30) entlang einer Achse (32) gleitet, die zur Richtung Y parallel ist, und
- eine dritte Gleitführung (36), in deren Innerem ein drittes Gleitstück (38) entlang einer Achse (40) gleitet, die zur Richtung U parallel ist,
wobei diese Gleitführungen (22, 28, 36) ohne jeden Freiheitsgrad an einem Gestell der Anzeigeeinrichtung (2) befestigt sind und jeweils in einer Verlagerungsebene des zweiten, dritten bzw. vierten Bildschirms (6, 8, 10) angeordnet sind,
- der zweite, dritte und vierte Bildschirm (6, 8, 10) ohne jeden Freiheitsgrad an einem ersten, zweiten bzw. dritten freien Ende (42 bis 44) des zweiten, ersten und dritten Gleitstücks (30, 24, 38) befestigt sind und der erste Bildschirm (4) an dem Gestell der Anzeigeeinrichtung befestigt ist,
- der Mechanismus (50) zur Synchronisation umfasst:
• eine erste Schiene (52), welche sich entlang der Richtung Y zwischen dem zweiten und dem dritten Ende (43, 44) erstreckt,
• eine zweite Schiene (54), welche sich entlang der Richtung X zwischen dem ersten und dem dritten Ende (42, 44) erstreckt,
wobei diese erste und zweite Schiene (52, 54) an dem ersten, zweiten und dritten freien Ende (42-44) derart befestigt sind, dass sie die Verlagerungen des zweiten, dritten und vierten Bildschirms (6, 8, 10) in deren jeweiliger Verlagerungsebene nicht behindern, und ausreichend steif sind, damit, wenn das dritte Ende (44) in der Richtung U gezogen wird, diese Zugkraft auch eine Verlagerung des ersten und zweiten Gleitstücks (24, 30) entlang der Richtungen X bzw. Y zur Folge hat.

4. Anzeigeeinrichtung nach einem der vorhergehenden Ansprüche, wobei die Anzeigeeinrichtung einen Mechanismus (20) zur Verriegelung der Position der Bildschirme in wenigstens einer Zwischenposition zwischen der zusammengeschobenen Position und der vollständig auseinandergezogenen Position aufweist.

5. Verfahren zur Anzeige eines Bildes auf einer Anzeigeeinrichtung gemäß einem der vorhergehenden Ansprüche, **dadurch gekennzeichnet, dass** das Verfahren umfasst:
- die Verlagerung der Bildschirme parallel zu der Anzeigeebene zwischen einer zusammengeschobenen Position, in welcher sich wenigstens zwei Bildschirme überlappen, um die kumulierte Anzeigefläche zu verringern, und einer vollständig auseinandergezogenen Position, in welcher die Überlappung der Bildschirme verringert oder beseitigt ist, um die kumulierte Anzeigefläche zu vergrößern, und
- die Steuerung (72) der Anzeige eines vollständigen Bildes auf der Gesamtheit der kumulierten Anzeigefläche sowohl in der zusammengeschobenen Position als auch in der vollständig auseinandergezogenen Position,
- die Messung (70) der Position der Bildschirme,
- die Erkennung (74) einer Verlagerung der Bildschirme anhand der gemessenen Position der Bildschirme, und
- in Reaktion darauf, die automatische Auslösung eines neuen Befehls zur Anzeige jedes Bildabschnitts.

6. Verfahren nach Anspruch 5, wobei das Verfahren den Befehl zur Anzeige desselben vollständigen Bildes auf der Gesamtheit der kumulierten Anzeigefläche sowohl in der zusammengeschobenen Position als auch in der vollständig auseinandergezogenen Position umfasst.

7. Informationsaufzeichnungsmedium, **dadurch gekennzeichnet, dass** es Anweisungen zur Ausführung eines Verfahrens gemäß einem der Ansprüche 5 bis 6, wenn sie von einem elektronischen Rechner ausgeführt werden, umfasst.

## Claims

1. Display unit comprising:
- multiple screens (4, 6, 8, 10) arranged parallel to a single display plane so as to form a total display area for an image which is equal to the total of the individual display areas of each screen, minus any overlap areas between the individual display areas,
- a mechanism (20) for moving the screens (4, 6, 8, 10) parallel to the display plane, between a retracted position in which at least two screens overlap so as to reduce the total display area, and a fully deployed position in which there is little or no overlap of the screens, to increase the total display area,
- a computer (12) which is able to command the display of portions of an image on respective screens so as to display the complete image over the entire total display area, this computer being able in particular to command the display of a complete image over the entire total display area, both in the retracted position and in the fully deployed position, and
- at least one sensor (16) which is able to measure the position of the screens, and the computer (12) is able to automatically adapt the display of the image depending on the measured position of the screens,
**characterized in that**
- the display unit comprises a first, a second, a third and a fourth screen (4, 6, 8, 10) which can be moved with respect to one another parallel to a single display plane,
- the moving mechanism (20) permits:
• movement of the second (6) and third (8) screens only in translation along, respectively, orthogonal directions Y and X, and
• permits movement of the fourth screen (10) only in translation along a direction U at an angle of 45° with the directions X and Y,
- the display unit comprises a synchronisation mechanism (50) which is able to impose a correlation between the movements of these second, third and fourth screens in order that the ratio of width to height of the total display area is constant whatever the position of the first, second and third screens (6, 8, 10).

2. Display unit according to Claim 1, in which the computer (2) is able to command the display of the same complete image over the entire total display area, both in the retracted position and in the fully deployed position.

3. Display unit according to either one of the preceding claims, in which:
the moving mechanism (20) comprises:
- a first channel (22) in which slides a first slider (24) along an axis (26) parallel to the X direction,
- a second channel (28) in which slides a second slider (30) along an axis (32) parallel to the Y direction, and
- a third channel (36) in which slides a third slider (38) along an axis (40) parallel to the U direction,
these channels (22, 28, 36) being fixed with no degree of freedom to a frame of the display unit (2), and being each arranged respectively in planes of movement of the second, third and fourth screens (6, 8, 10),
- the second, third and fourth screens (6, 8, 10) are fixed with no degree of freedom to first, second and third free ends (42 to 44), respectively, of the second, first and third sliders (30, 24, 38), and the first screen (4) is fixed to the frame of the display unit,
- the synchronising mechanism (50) comprises:
• a first rail (52) which extends along the Y direction between the second and third ends (43, 44),
• a second rail (54) which extends along the X direction between the first and third ends (42, 44),
these first and second rails (52, 54) being fixed to the first, second and third free ends (42-44) so as to not hamper the movements of the second, third and fourth screens (6, 8, 10) in their respective plane of movement, and being sufficiently rigid such that, when the third end (44) is pulled in the U direction, this pulling force also causes the first and second sliders (24, 30) to move, respectively, along the X and Y directions.

4. Display unit according to any one of the preceding claims, in which the display unit comprises a mechanism (20) for locking the position of the screens in at least one intermediate position between the retracted position and the fully deployed position.

5. Method for displaying an image on a display unit according to any one of the preceding claims, **characterized in that** the method comprises:
- moving the screens parallel to the display plane between a retracted position in which at least two screens overlap so as to reduce the total display area, and a fully deployed position in which there is little or no overlap between the screens so as to increase the total display area, and
- commanding (72) the display of a complete image over the entire total display area both in the retracted position and in the fully deployed position,
- measuring (70) the position of the screens,
- detecting (74) movement of the screens from the measured position of the screens, and
- in response, automatically triggering a new command for displaying each image portion.

6. Method according to Claim 5, in which the method comprises commanding the display of the same complete image over the entire total display area both in the retracted position and in the fully deployed position.

7. Device for recording information, **characterized in that** it comprises instructions for carrying out a method according to either one of Claims 5 and 6, when these are executed by an electronic computer.
